# DEMANDE DE BREVET EUROPEEN

(11) **EP 1 880 895 A1**
(43) Date de publication de la demande: **23.01.2008**
(21) Numéro de dépôt: 07290862.7
(22) Date de dépôt: 09.07.2007
(51) Int. Cl.: B60N 2/48

(54) **Appui-tête de siège de véhicule automobile déplaçable vers l'avant et vers le haut encas de choc**

(30) Priorité: 20.07.2006 FR 0606630
(71) Demandeur: CENTRE D'ETUDE ET RECHERCHE POUR L'AUTOMOBILE ( CERA), 51100 Reims (FR)
(72) Inventeur: Bellvehi, Eduard, 17003 Girona (ES); Oliva, Miquel-Angel, 17001 Girona (ES)
(74) Mandataire: Sayettat, Julien Christian

(57) **Abrégé**

L'invention concerne un appui-tête (1) de siège de véhicule automobile, ledit appui-tête comprenant une armature (2) de montage sur le dossier dudit siège et un coussin (3) d'appui solidaire d'une structure (4) interne, le bas de ladite structure étant articulée par rapport à ladite armature selon un premier axe transversal (5), le haut de ladite structure étant articulé selon un deuxième axe transversal (6) par rapport à la première extrémité d'un organe (7) déployable, la deuxième extrémité dudit organe étant articulée par rapport à ladite armature selon un troisième axe transversal (8), ledit organe étant mobile entre une position rétractée et une position déployée, ledit organe étant actionnable par un système de déploiement relié à un système de détection d'un choc, ledit premier axe est monté mobile en translation, selon une direction sensiblement verticale, entre une position basse (9) correspondant à ladite position rétractée et une position haute (10) correspondant à ladite position déployée, de sorte que ladite structure subisse un mouvement simultané de rotation vers l'avant et de translation vers le haut en cas de choc.

## Description

L'invention concerne un appui-tête de siège de véhicule automobile.

Il est connu, notamment du document EP1316469 de réaliser un appui-tête de siège de véhicule automobile, ledit appui-tête comprenant une armature de montage sur le dossier dudit siège et un coussin d'appui solidaire d'une structure interne, le bas de ladite structure étant articulée par rapport à ladite armature selon un premier axe transversal, le haut de ladite structure étant articulé selon un deuxième axe transversal par rapport à la première extrémité d'un organe déployable, la deuxième extrémité dudit organe étant articulée par rapport à ladite armature selon un troisième axe transversal, ledit organe étant mobile entre une position rétractée, correspondant à une configuration de confort dudit appui-tête, et une position déployée, correspondant à une configuration de sécurité dudit appui-tête, ledit organe étant actionnable par un système de déploiement $relié à un système de détection d'un choc, dans laquelle ladite structure est actionnée en rotation vers l'avant, de sorte à rapprocher le coussin de l'utilisateur pour mieux le protéger.

Il est connu en outre, notamment du document DE19961617, de réaliser un appui-tête agencé pour que la structure soit actionnée à la fois vers l'avant et vers le haut, ceci pour améliorer encore la protection de l'utilisateur. Un tel mouvement est assuré par un agencement de type « parallélogramme », qui présente l'inconvénient d'être complexe et de ne pas permettre un enveloppement suffisant du haut de la tête de l'utilisateur.

L'invention a pour but de proposer un appui tête, effectuant un tel mouvement combiné vers l'avant et le haut en cas de choc, selon une réalisation simplifiée et permettant un cinématique plus sécurisée de l'appui-tête en cas de choc.

A cet effet, l'invention propose l'invention propose un appui-tête de siège de véhicule automobile, ledit appui-tête comprenant une armature de montage sur le dossier dudit siège et un coussin d'appui solidaire d'une structure interne, le bas de ladite structure étant articulée par rapport à ladite armature selon un premier axe transversal, le haut de ladite structure étant articulé selon un deuxième axe transversal par rapport à la première extrémité d'un organe déployable, la deuxième extrémité dudit organe étant articulée par rapport à ladite armature selon un troisième axe transversal, ledit organe étant mobile entre une position rétractée, correspondant à une configuration de confort dudit appui-tête, et une position déployée, correspondant à une configuration de sécurité dudit appui-tête, ledit organe étant actionnable par un système de déploiement relié à un système de détection d'un choc, ledit premier axe étant monté mobile en translation, selon une direction sensiblement verticale, entre une position basse correspondant à ladite position rétractée et une position haute correspondant à ladite position déployée, de sorte que ladite structure subisse un mouvement simultané de rotation vers l'avant et de translation vers le haut en cas de choc.

Dans cette description, les termes de positionnement dans l'espace (avant, transversal, longitudinal, haut, bas, vertical,...) sont pris en référence à l'appui-tête disposé dans le véhicule.

D'autres particularités et avantages de l'invention apparaîtront dans la description qui suit, faite en référence aux figures jointes dans lesquelles :

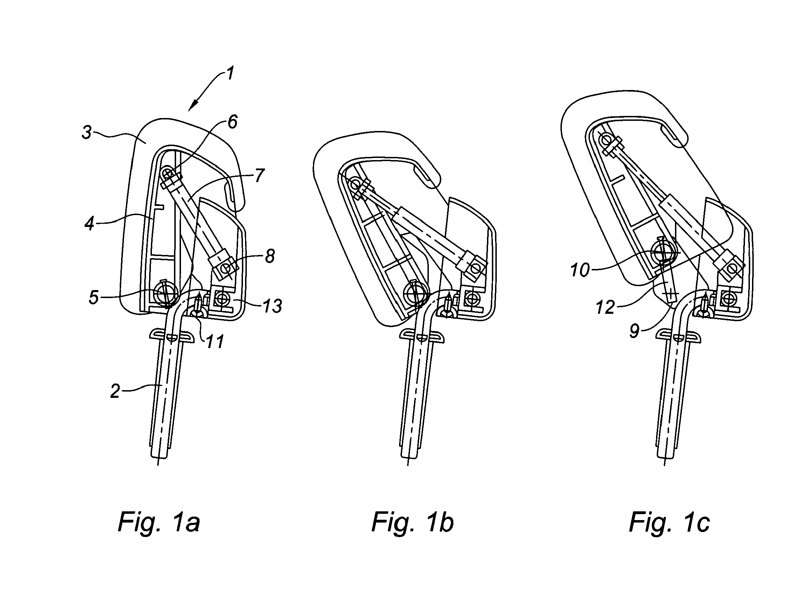

- les figures 1 sont des représentations en coupe longitudinale d'un appui-tête, selon un premier mode de réalisation, en configuration de confort (a), en configuration intermédiaire (b), l'organe étant en cours de déploiement et en configuration de sécurité (c),
- les figures 2 sont des représentations en coupe longitudinale d'un appui-tête, selon un deuxième mode de réalisation, en configuration de confort (a), la structure étant disposée en position reculée, en configuration intermédiaire (b), l'organe étant en cours de déploiement et en configuration de sécurité (c).

En référence aux figures, on décrit à présent un appui-tête 1 de siège de véhicule automobile, ledit appui-tête comprenant une armature 2 de montage sur le dossier dudit siège et un coussin 3 d'appui solidaire d'une structure interne 4, le bas de ladite structure étant articulée par rapport à ladite armature selon un premier axe transversal 5, le haut de ladite structure étant articulé selon un deuxième axe transversal 6 par rapport à la première extrémité d'un organe déployable 7, la deuxième extrémité dudit organe étant articulée par rapport à ladite armature selon un troisième axe transversal 8, ledit organe étant mobile entre une position rétractée, correspondant à une configuration de confort dudit appui-tête, et une position déployée, correspondant à une configuration de sécurité dudit appui-tête, ledit organe étant actionnable par un système de déploiement relié à un système de détection d'un choc, lesdits systèmes n'étant pas représentés, ledit premier axe étant monté mobile en translation, selon une direction sensiblement verticale, entre une position basse 9 correspondant à ladite position rétractée et une position haute 10 correspondant à ladite position déployée, de sorte que ladite structure subisse un mouvement simultané de rotation vers l'avant et de translation vers le haut en cas de choc.

Selon les réalisations représentées, l'organe 7 est formé d'un piston.

Selon une réalisation, le système de déploiement est de nature pyrotechnique, le déploiement du piston s'effectuant par remplissage par gaz issu d'une explosion.

Selon les réalisations représentées, le premier axe 5 est monté sur une embase 11, solidaire de l'armature 2, dans deux oblongs 12 sensiblement verticaux, disposés de part et d'autre de l'appui-tête 1, dont les extrémités définissent les positions basse 9 et haute 10.

La deuxième extrémité de l'organe 7 est articulée par rapport à l'armature 2 selon le troisième axe transversal 8 par l'intermédiaire d'une pièce d'interface 13 solidaire de ladite armature.

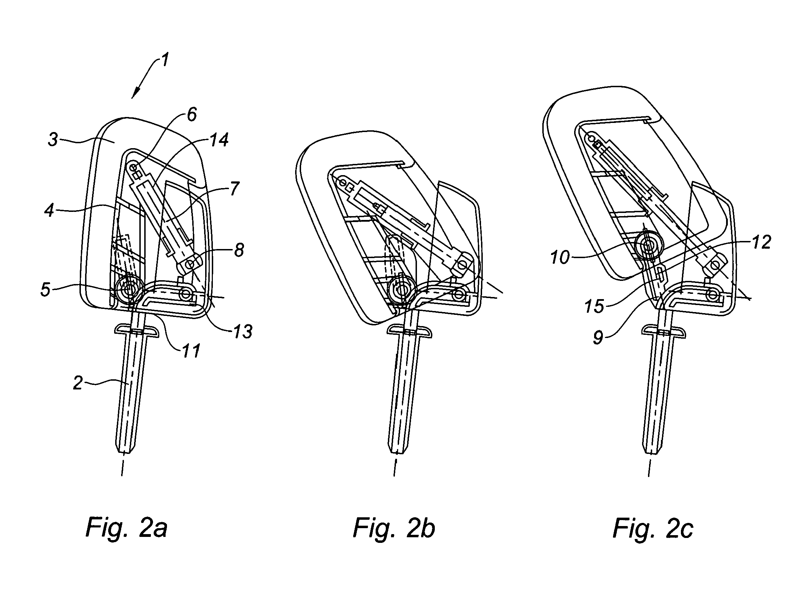

Selon la réalisation des figures 2, le haut de la structure 4 est articulé par rapport la première extrémité de l'organe 7 par l'intermédiaire d'une pièce 14, sous forme de manchon, coulissant le long de ladite première extrémité de sorte que ladite structure puisse être actionnée en rotation, sans déploiement dudit organe, afin de permettre un réglage de la distance du coussin 3 à la tête de l'utilisateur.

Le premier axe 5 est bloqué en position basse 9 par un moyen de blocage 15, de la forme d'un clip disposé dans l'oblong 12, déblocable sous l'effort appliqué audit premier axe vers le haut par le déploiement de l'organe 7. Ceci permet un réglage de l'appui-tête 1, le premier axe 5 restant bloqué en position basse 9.

## Revendications

1. Appui-tête (1) de siège de véhicule automobile, ledit appui-tête comprenant une armature (2) de montage sur le dossier dudit siège et un coussin (3) d'appui solidaire d'une structure (4) interne, le bas de ladite structure étant articulée par rapport à ladite armature selon un premier axe transversal (5), le haut de ladite structure étant articulé selon un deuxième axe transversal (6) par rapport à la première extrémité d'un organe (7) déployable, la deuxième extrémité dudit organe étant articulée par rapport à ladite armature selon un troisième axe transversal (8), ledit organe étant mobile entre une position rétractée, correspondant à une configuration de confort dudit appui-tête, et une position déployée, correspondant à une configuration de sécurité dudit appui-tête, ledit organe étant actionnable par un système de déploiement relié à un système de détection d'un choc, ledit appui-tête étant **caractérisé en ce que** ledit premier axe est monté mobile en translation, selon une direction sensiblement verticale, entre une position basse (9) correspondant à ladite position rétractée et une position haute (10) correspondant à ladite position déployée, de sorte que ladite structure subisse un mouvement simultané de rotation vers l'avant et de translation vers le haut en cas de choc.

2. Appui-tête selon la revendication 1, l'organe (7) étant formé d'un piston.

3. Appui-tête selon la revendication 2, le système de déploiement étant de nature pyrotechnique, le déploiement du piston s'effectuant par remplissage par gaz issu d'une explosion.

4. Appui-tête selon l'une quelconque des revendications 1 à 3, le premier axe (5) étant monté sur une embase (11), solidaire de l'armature (2), dans deux oblongs (12) sensiblement verticaux, disposés de part et d'autre dudit appui-tête, dont les extrémités définissent les positions basse (9) et haute (10).

5. Appui-tête selon la revendication 4, la deuxième extrémité de l'organe (7) étant articulée par rapport à l'armature (2) selon le troisième axe transversal (8) par l'intermédiaire d'une pièce d'interface (13) solidaire de ladite armature.

6. Appui-tête selon l'une quelconque des revendications 1 à 5, le haut de la structure (4) étant articulé par rapport la première extrémité de l'organe (7) par l'intermédiaire d'une pièce (14) coulissant le long de ladite première extrémité, de sorte que ladite structure puisse être actionnée en rotation, sans déploiement dudit organe, afin de permettre un réglage de la distance entre le coussin (3) et la tête de l'utilisateur.

7. Appui tête selon l'une quelconque des revendications 1 à 6, le premier axe (5) étant bloqué en position basse (9) par un moyen de blocage (15) déblocable sous l'effort appliqué audit premier axe vers le haut par le déploiement de l'organe (7).
